(19) Europäisches Patentamt
European Patent Office
Office européen des brevets

(11) EP 4 223 826 A1

# (12) EUROPEAN PATENT APPLICATION

(43) Date of publication:
**09.08.2023 Bulletin 2023/32**

(21) Application number: **22155516.2**

(22) Date of filing: **08.02.2022**

(51) International Patent Classification (IPC):
***C08G 18/48*** *(2006.01)* ***C08G 18/76*** *(2006.01)*

(52) Cooperative Patent Classification (CPC):
**C08G 18/7664; C08G 18/48**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventors:
- **Li, Zhijiang**
**Shanghai, 201318 (CN)**
- **Gu, Yongming**
**Shanghai, 201208 (CN)**
- **Wu, Frank**
**Shanghai, 201102 (CN)**
- **Zhang, Hui**
**Shanghai, 201502 (CN)**

(74) Representative: **Levpat**
**c/o Covestro AG**
**Gebäude K12**
**51365 Leverkusen (DE)**

## (54) ISOCYANATE COMPOSITION AND USE THEREOF

(57) The invention relates to an isocyanate component, a corresponding polyurethane reaction system, a polyurethane resin prepared by the reaction of the polyurethane reaction system, and use thereof.

EP 4 223 826 A1

## Description

### Technical field

The invention relates to an isocyanate composition, a corresponding polyurethane reaction system and a polyurethane resin prepared therefrom. The present invention also relates to use of the polyurethane reaction system for preparing pultruded composites and a method for preparing pultruded composites.

### Prior art

Polyurethane products can have satisfactory quality. Compared with conventional materials, fiberreinforced polyurethane composites have characteristics of light weight, corrosion resistance, high toughness and high operation efficiency. However, different isocyanate compositions and different polyurethane reaction systems will bring about different technological problems. An urgent problem in the industry is how to improve polyurethane raw materials for better preparation of resins and composites.

CN 104045806A discloses a polyurethane composition for preparing a polyurethane composite, comprising: a) a polyisocyanate component, wherein the polyisocyanate component contains 10-56% by weight of 2,2'-diphenylmethane diisocyanate and 2,4'-diphenylmethane diisocyanate; b) an isocyanate-reactive component.

CN107771193A discloses a new polyurethane system that can be advantageously used for manufacturing large-scale fiber composite parts, use of the polyurethane reaction system for manufacturing fiber reinforced parts and the fiber reinforced parts manufactured by the new polyurethane system.

CN110546181A discloses a polyurethane pultruded part composed of 40-80% by volume of carbon fibers and a polyurethane resin having density of> 1.05 g/cm$^3$, wherein the polyurethane is composed of a polyisocyanate component (A) and a polyol component (B).

Despite the above disclosure, the industry still urgently needs an improved polyurethane reaction system to meet the requirements in industrial production.

### Summary of invention

An aspect of the invention is an isocyanate composition comprising:

A1) 2,2'-diphenylmethane diisocyanate (i.e. diphenylmethane-2,2'-diisocyanate, 2,2'-MDI for short) and/or
A2) 2,4'-diphenylmethane diisocyanate (i.e. diphenylmethane-2,4'-diisocyanate, 2,4'-MDI for short);

wherein the sum of the amounts of A1) and A2) is 5.0-34% by weight, preferably 10.5-34% by weight, more preferably 13.5-24.8% by weight, particularly preferably 13.5-19.5% by weight, based on the total weight of the isocyanate composition.

Preferably, the amount of A1) 2,2'-diphenylmethane diisocyanate is ≥ 1.2% by weight, preferably 1.5-21.6% by weight, more preferably 2.0-21.6% by weight, particularly preferably 3-11% by weight, based on the total weight of the isocyanate composition.

Preferably, the isocyanate composition further comprises A3) 4,4'-diphenylmethane diisocyanate (i.e. diphenylmethane-4,4'-diisocyanate, 4,4'-MDI for short) in an amount of ≤ 54% by weight, preferably 20-53% by weight, based on the total weight of the isocyanate composition.

Preferably, the isocyanate composition further comprises A4) 32-55% by weight, based on the total weight of the isocyanate composition, of a polynuclear polymeric isocyanate.

Preferably, the amount of the polymeric diphenylmethane diisocyanate in the isocyanate composition is ≤ 54% by weight, preferably ≤ 52% by weight, based on the total weight of the isocyanate composition.

Preferably, a polyurethane reaction system comprising the isocyanate composition wherein the sum of the amounts of A1) and A2) is 5.0-34% by weight (preferably 10.5-34 % by weight, more preferably 13.5-24.8 % by weight, particularly preferably 13.5-19.5 % by weight), based on the total weight of the isocyanate composition, has a gel time at 25°C increased by ≥ 10%, preferably ≥ 15%, more preferably ≥ 20%, compared with that of the same polyurethane reaction system but wherein the sum of the amounts of A1) and A2) is not 5.0-34% by weight (preferably not 10.5-34 % by weight, more preferably not 13.5-24.8 % by weight, particularly preferably not 13.5-19.5 % by weight), based on the total weight of the isocyanate composition.

Specifically, if the polyurethane reaction system comprising the isocyanate composition wherein the sum of the amounts of A1) and A2) is 5.0-34% by weight, based on the total weight of the isocyanate composition, has a gel time at 25°C of X, and the same polyurethane reaction system but wherein the sum of the amounts of A1) and A2) is not 5.0-34% by weight, based on the total weight of the isocyanate composition, has a gel time at 25°C of Y, then the

gel time at 25°C of the polyurethane reaction system comprising the isocyanate composition wherein the sum of the amounts of A1) and A2) is 5.0-34% by weight, based on the total weight of the isocyanate composition, is increased by (Y-X)/X*100%.

Preferably, a polyurethane reaction system comprising the isocyanate composition wherein the sum of the amounts of A1) and A2) is 5.0-34% by weight (preferably 10.5-34% by weight, more preferably 13.5-24.8% by weight, particularly preferably 13.5-19.5% by weight), based on the total weight of the isocyanate composition, has a curing time at 180°C reduced by ≥ 1%, preferably ≥ 1.5%, more preferably ≥ 2%, compared with that of the same polyurethane reaction system but wherein the sum of the amounts of A1) and A2) is not 5.0-34% by weight (preferably not 10.5-34% by weight, more preferably not 13.5-24.8% by weight, particularly preferably not 13.5-19.5% by weight), based on the total weight of the isocyanate composition.

Specifically, if the polyurethane reaction system comprising the isocyanate composition wherein the sum of the amounts of A1) and A2) is not 5.0-34% by weight, based on the total weight of the isocyanate composition, has a curing time at 25°C of H, and the same polyurethane reaction system but wherein the sum of the amounts of A1) and A2) is 5.0-34% by weight, based on the total weight of the isocyanate composition, has a curing time at 180°C of G, then the curing time at 25°C of the polyurethane reaction system comprising the isocyanate composition wherein the sum of the amounts of A1) and A2) is 5.0-34% by weight, based on the total weight of the isocyanate composition, is reduced by (H-G)/H* 100%.

Preferably, a polyurethane reaction system comprising the isocyanate composition comprising ≥ 1.2% by weight of A1) (preferably 1.5-21.6% by weight, more preferably 2.0-21.6% by weight, particularly preferably 3-11% by weight), based on the total weight of the isocyanate composition, has a gel time at 25°C increased by ≥ 10%, preferably ≥ 15%, more preferably ≥ 20%, compared with that of the same polyurethane reaction system but comprising the isocyanate composition comprising < 1.2% by weight of A1), based on the total weight of the isocyanate composition.

Specifically, if the polyurethane reaction system comprising the isocyanate composition comprising < 1.2% by weight of A1), based on the total weight of the isocyanate composition, has a gel time at 25°C of P, and the same polyurethane reaction system but comprising the isocyanate composition comprising ≥ 1.2% by weight of A1), based on the total weight of the isocyanate composition, has a gel time at 25°C of Q, then the gel time at 25°C of the polyurethane reaction system comprising the isocyanate composition comprising ≥ 1.2% by weight of A1), based on the total weight of the isocyanate composition, is increased by (Q-P)/P* 100%.

Preferably, the polyurethane reaction system comprising the isocyanate composition comprising ≥ 1.2% by weight (preferably 1.5-21.6% by weight, more preferably 2.0-21.6% by weight, particularly preferably 3-15% by weight) of A1), based on the total weight of the isocyanate composition, has a curing time at 25°C reduced by ≥ 1%, preferably ≥ 1.5%, more preferably ≥ 2%, compared with that of the same polyurethane reaction system but comprising the isocyanate composition comprising < 1.2% by weight of A1), based on the total weight of the isocyanate composition.

Specifically, if the polyurethane reaction system comprising the isocyanate composition comprising < 1.2% by weight of A1), based on the total weight of the isocyanate composition, has a curing time at 180°C of M, and the same polyurethane reaction system but comprising the isocyanate composition comprising ≥ 1.2% by weight of A1), based on the total weight of the isocyanate composition, has a curing time at 180°C of N, then the gel time at 25°C of the polyurethane reaction system comprising the isocyanate composition comprising ≥ 1.2% by weight of A1), based on the total weight of the isocyanate composition, is reduced by (M-N)/M* 100%.

Another aspect of the present invention provides a polyurethane reaction system comprising:

component A): the isocyanate composition of the invention;
component B), comprising:

B1) 50-100% by weight, preferably 58-91.6% by weight, based on the total weight of component B), of an organic polyol, preferably a polyether polyol, with a functionality of 2-5, preferably 2-4, and a weight-average molecular weight of ≤ 900 g/mol (tested according to ISO14900-2017), preferably ≤ 800g/mol, more preferably ≤ 750g/mol;
B2) 0-50% by weight, preferably 8-40% by weight, based on the total weight of component B), of a polyether polyol with a functionality of 2-3 and a weight-average molecular weight of ≥ 1200g/mol (tested according to ISO14900-2017), preferably ≥ 1500g/mol, more preferably ≥ 2000g/mol.

Preferably, component A) has a viscosity of 50-160 mPa·s at 25°C (tested according to GB/T 12009.3-2009), preferably 80-160 mPa·s.

Preferably, the polyurethane reaction system has an initial viscosity of 90-450 mPa·s, preferably 150-400 mPa·s at 25°C.

Preferably, component A) further comprises A3) 4,4'-diphenylmethane diisocyanate in an amount of ≤ 50% by weight, preferably 20-50% by weight, based on the total weight of component A).

Preferably, component A) further comprises A4) 32-55% by weight, based on the total weight of component

A), of a polynuclear polymeric isocyanate.

Preferably, the amount of component A1) 2,2'-diphenylmethane diisocyanate is ≥ 1.2% by weight, preferably 1.5-21.6% by weight, more preferably 2.0-21.6% by weight, particularly preferably 3-11% by weight, based on the total weight of component A).

Preferably, the polyurethane reaction system has a gel time at 25°C of 15-40 minutes, preferably 18-30 minutes, more preferably 18-25 minutes.

Preferably, the polyurethane reaction system has a curing time at 180°C of 5-60 seconds, preferably 10-40 seconds, more preferably 15-25 seconds.

Preferably, the polyurethane reaction system comprising the isocyanate composition comprising ≥ 1.2% by weight of A1), based on the total weight of the isocyanate composition, has a curing time at 180°C reduced by ≥ 1%, preferably ≥ 1.5%, more preferably ≥ 2%, compared with that of the same polyurethane reaction system but comprising the isocyanate composition comprising < 1.2% by weight of A1), based on the total weight of the isocyanate composition.

Preferably, the polyurethane reaction system further comprises fillers, internal mold release agents, flame retardants, smoke inhibitors, dyes, pigments, antistatic agents, antioxidants, UV stabilizers, diluents, defoamers, couplings agents, surface wetting agents, leveling agents, dewatering agents, catalysts, molecular sieves, thixotropic agents, plasticizers, foaming agents, foam stabilizers, foam stabilizing agents or combinations thereof.

Another aspect of the present invention provides a polyurethane resin prepared by the reaction of the polyurethane reaction system of the present invention.

Another aspect of the present invention provides use of the isocyanate composition of the present invention for the production of back rail for solar cells and/or frames for solar cells. Preferably, the isocyanate composition of the present invention is used for preparing the backboards for solar cells, the frames of solar cells or parts thereof by a pultrusion process.

Another aspect of the present invention provides use of the polyurethane reaction system of the present invention in backboards for solar cells and/or frames for solar cells. Preferably, the isocyanate composition of the present invention is used for preparing the backboards for solar cells, the frames for solar cells or parts thereof by a pultrusion process.

Surprisingly, we found that the isocyanate composition and the corresponding polyurethane reaction system of the present invention are particularly suitable for the related environmental protection industries of backboards and/or frames of solar cells, and can produce economic, environmentally friendly, and excellent related products.

Another aspect of the present invention provides a method for preparing a polyurethane composite by mixing a polyurethane composition comprising the following components:

the polyurethane reaction system of the present application; and
at least a reinforcing material, preferably a fibrous reinforcing material.

Preferably, the method is carried out by a pultrusion process, a winding process, a hand lay-up process, an injection molding process or a combination thereof, preferably a pultrusion process.

The fibrous reinforcing material of the present invention refers to a material selected from glass fibers, carbon fibers, polyester fibers, natural fibers, aramid fibers, nylon fibers, basalt fibers, boron fibers, silicon carbide fibers, asbestos fibers, whiskers, hard particles, metal fibers or a combination thereof.

Preferably, the method further comprises:

placing at least a peel ply (2) and at least a fibrous reinforcing material (1) in an infiltration box (5) having an inlet (5a) and an outlet (5b); wherein the peel ply partially covers the fibrous reinforcing material (1);
infiltrating the fibrous reinforcing material (1) with the polyurethane composition via the part of the fibrous reinforcing material (1) which is not covered by the peel ply;
drawing the infiltrated fibrous reinforcing material (1) and the peel ply (2) through a mold (6), and curing it, so that the polyurethane pultruded composite is obtained.

The peel ply does not cover the fibrous reinforcing material completely, but only partially. The polyurethane composition contacts the fibrous reinforcing material via the part of the fibrous reinforcing material, which is not covered by the peel ply, and infiltrates the fibrous reinforcing material.

Preferably, the at least a peel ply (2) includes two peel plies (2a, 2b). The two peel plies (2a, 2b) are respectively placed on two opposite inner sides (5i, 5j) of the infiltration box (5). The fibrous reinforcing material (1) is located between said two peel plies (2a, 2b). The injection device (4) includes at least two injection ports (4a, 4b), said two injection ports (4a, 4b) being located on two opposite sides (5m, 5n) of the infiltration box (5), where no peel ply is placed.

Another aspect of the present invention provides a polyurethane composite, which is prepared by the method for preparing a polyurethane composite of the present invention.

Preferably, the content of the fibrous reinforcing material in the polyurethane composite is 70-88% by weight,

preferably 75-86% by weight, more preferably 79-85% by weight, based on the total weight of the polyurethane composite.

Another aspect of the present invention provides a polyurethane product comprising the polyurethane resin of the present invention. Preferably, the polyurethane product is selected from cable trays, curtain wall frames for doors and windows, ladder frames, tent poles or tubes, anti-glare boards, floors, sucker rods, telegraph poles and cross arms, guardrails, grilles, construction profiles, profiles and plates for containers, bicycle racks, backboards for solar cells, frames for solar cells, fishing poles, cable cores, insulator core rods, radomes, single-layer or sandwich continuous plates, sleepers, sheets or plates used for blade shells, webs, spar caps, main beams, auxiliary beams and blade roots of wind turbine blades.

Surprisingly, we found that the isocyanate composition of the present invention comprising a specific content of components A1) and A2), particularly preferably comprising a specific content of component A1), can prolong/increase the gel time of the polyurethane reaction system comprising the isocyanate composition, but reduce the curing time thereof. Generally speaking, if the gel time of a system is prolonged, the curing time will also be prolonged. However, we unexpectedly found that the polyurethane reaction system of the present invention comprising the aforementioned isocyanate composition can obtain longer gel time and shorter curing time.

Specifically, longer gel time can allow the reinforcing material to be more sufficiently infiltrated and formed, thereby preparing a polyurethane composite with uniform filling and excellent physical properties. A more advantageous curing time can improve production efficiency, thereby saving costs and energy, and being more environmentally friendly. Therefore, it can be better and more flexibly applicable to polyurethane pultruded composites, especially large-scale polyurethane pultruded composites, for example, the preparation of profiles used for preparing main beams of wind turbine blades.

In addition, the preferred method for preparing a polyurethane pultruded composite of the present invention uses a continuous pultrusion process, wherein the peel ply and the fibrous reinforcing material are drawn through the infiltration box at a certain speed, and the polyurethane composition is injected into the infiltration box by an injection device, so that the fibrous reinforcing material is infiltrated. Preferably, the polyurethane composition is injected via a part of the fibrous reinforcing material, which is not covered by the peel ply, and the fibrous reinforcing material (1) is infiltrated. Surprisingly, the method of the present invention including the characteristics of the peel ply, the proper injection position, the infiltration method, the drawing speed and the injection speed of the polyurethane composition not only provides high-quality polyurethane pultruded composites with a satisfactory surface, but also improves production efficiency and saves costs.

Moreover, due to the longer gel time, better polyurethane pultrusion can be achieved. At the same time, the polyurethane pultruded composites of the present invention have excellent physical properties and high glass fiber content.

Those of ordinary skill in the art know that isocyanates used as raw materials usually include isomers such as 4,4'-diphenylmethane diisocyanate, 2,4'-diphenylmethane diisocyanate, and 2,2'-diphenylmethane diisocyanate. Whether it is laboratory application or industrial production, the content of 4,4'-diphenylmethane diisocyanate in isocyanate is usually very high, and sometimes even exceeds 50% by weight, which can ensure its reaction activity. Among all isomers, 2,2'-diphenylmethane diisocyanate has the lowest activity. For example, WO2007/087987 discloses that "For the monomer diphenylmethane diisocyanate, 4,4'-isomer and 2,4'-isomer are dominant for synthesis reasons. 2,2'-isomer, which exists in a smaller amount and basically has no industrial value, is also formed to a lower degree." This is partly due to the fact that pure 2,2'-diphenylmethane diisocyanate cannot be used industrially, and isocyanate containing 2,2'-diphenylmethane diisocyanate often has the disadvantage of very slow reaction, so that the reaction is not complete.

However, it is inevitable that various isomers are formed in the synthesis of isocyanates. Therefore, 2,2'-diphenylmethane diisocyanate is often incinerated as garbage, causing huge waste and environmental pollution. 4,4'-diphenylmethane diisocyanate and 2,4'-diphenylmethane diisocyanate are expensive because of their higher activity. The preferred solution of the present invention makes excellent use of 2,2'-diphenylmethane diisocyanate. It not only turns waste into treasure, has high economic advantages, but also unexpectedly provides more applicable isocyanate compositions. As a preferred solution of the present invention, the composition comprising a certain content of 2,2'-diphenylmethane diisocyanate increases the amount of 2,2'-diphenylmethane diisocyanate. The highpriced 4,4'-diphenylmethane, 2,4'-diphenylmethane diisocyanate and/or polymeric isocyanates usually used in large quantities in the prior art can be reduced accordingly, thereby saving costs and being more economical and environmentally friendly.

## Embodiments

The specific embodiments for implementing the present invention will be described below. % by weight refers to weight percentage;

Functionality refers to the value determined according to the industry formula: Functionality = hydroxyl value * molecular weight / 56100; wherein the molecular weight is determined by GPC high performance liquid chromatography.

Isocyanate index refers to the value calculated by the following formula:

$$\text{Isocyanate index (\%)} = \frac{\text{Moles of isocyanate groups (NCO groups) in component A}}{\text{Moles of groups reactive toward isocyanate groups in component B}} \times 100\%$$

The isocyanate composition of the present application comprises:

A1) 2,2'-diphenylmethane diisocyanate;
A2) 2,4'-diphenylmethane diisocyanate;

wherein the sum of the amounts of A1) and A2) is 5.0-34% by weight, preferably 10.5-34% by weight, more preferably 13.5-24.8 % by weight, particularly preferably 13.5-19.5% by weight, based on the total weight of the isocyanate composition.

Optionally, the isocyanate composition of the present invention may comprise any polyisocyanate, including an aromatic, aliphatic, and cycloaliphatic polyisocyanate and a combination thereof. The polyisocyanate can be represented by the general formula R(NCO)n, where R represents an aliphatic hydrocarbon group containing 2-18 carbon atoms, an aromatic hydrocarbon group containing 6-15 carbon atoms, an araliphatic hydrocarbon group containing 8-15 carbon atoms, n=2-4.

Usable polyisocyanates include, preferably but not limited to, vinyl diisocyanate, tetramethylene 1,4-diisocyanate, hexamethylene diisocyanate (HDI), dodecyl 1,2-diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethylhexane, hexahydrotoluene-2,4-diisocyanate, hexahydrophenyl-1,3-diisocyanate, hexahydrophenyl-1,4-diisocyanate, perhydro-diphenylmethane-2,4-diisocyanate, perhydrodiphenylmethane-4,4-diisocyanate, phenylene 1,3-diisocyanate, phenylene 1,4-diisocyanate, stilbene 1,4-diisocyanate, 3,3-dimethyl-4,4-diphenyldiisocyanate, toluene-2,4-diisocyanate (TDI), toluene-2,6-diisocyanate (TDI), diphenylmethane-2,4'-diisocyanate (MDI), diphenylmethane-2,2'-diisocyanate (MDI), diphenylmethane-4,4'-diisocyanate (MDI), mixtures of diphenylmethane diisocyanates and/or diphenylmethane diisocyanate homologues with more nuclei, polyphenylene polymethylene polyisocyanate (polymeric MDI), naphthylene-1,5-diisocyanate (NDI), their isomers, any mixtures between them and their isomers.

Optionally, the polyisocyanate of the present invention may also include isocyanates modified with carbodiimide, allophanate, etc., preferably, but not limited to, diphenylmethane diisocyanate, carbodiimide-modified diphenylmethane isocyanates, their isomers, mixtures between them and their isomers. When used in the present invention, polyisocyanates include isocyanate dimers, trimers, tetramers, or combinations thereof.

Optionally, the polyisocyanate may be selected from aromatic isocyanates, preferably diphenylmethane diisocyanate, toluene diisocyanate, diphenylmethane diisocyanate or a combination thereof, particularly preferably diphenylmethane diisocyanate or (polymeric) diphenylmethane diisocyanate.

Optionally, the polyisocyanate may be any aliphatic, cycloaliphatic or aromatic isocyanate known to be used in the preparation of polyurethanes. The functionality of the polyisocyanate that can be used in the present invention is preferably 2.0-3.5, particularly preferably 2.1-2.9. The viscosity of the polyisocyanate is preferably 5-700 mPa·s, particularly preferably 10-300 mPa·s, measured at 25°C according to DIN 53019-1-3.

Preferably, the polyisocyanate may include diphenylmethane diisocyanate (MDI), polyphenylene polymethylene polyisocyanate (pMDI), and their polymers, prepolymers, or combinations thereof.

Preferably, the NCO content of the polyisocyanate prepolymer is 20-33.5% by weight, preferably 25-32.5% by weight. The NCO content is measured by GB/T 12009.4-2016.

Preferably, the content of the polyisocyanate of the present invention is ≥ 53% by weight, preferably ≥ 55% by weight, more preferably 55-70% by weight, based on the total weight of the polyurethane reaction system.

Component B) of the present application comprises:

B1) 50-100% by weight, preferably 58-91.6% by weight, based on the total weight of component B), of an organic polyol, preferably a polyether polyol, with functionality of 2-5, preferably 2-4 and weight-average molecular weight of ≤ 900 g/mol (tested according to ISO14900-2017), preferably ≤ 800 g/mol, more preferably ≤ 750 g/mol;
B2) 0-50% by weight, preferably 8-40% by weight, based on the total weight of component B), of a polyether polyol with functionality of 2-3 and weight-average molecular weight of ≥ 1200g/mol (tested according to ISO14900-2017), preferably ≥ 1500g/mol, more preferably ≥ 2000g/mol.

Preferably, the polyurethane reaction system/composition further comprises:
B3) one or more compounds with the structure of formula (I) in an amount of 0-35% by weight, preferably 4.6-35% by weight, based on the total weight of the polyurethane composition being 100% by weight

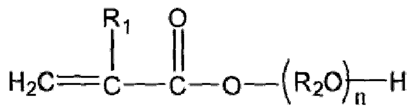

I

wherein R1 is selected from hydrogen, methyl or ethyl; R2 is selected from alkylene groups having 2-6 carbon atoms, propane-2,2-diylbis(4-phenylene), 1,4-xylylene, 1,3-xylylene, 1,2-xylylene; n is an integer selected from 1-6, and component C, a free radical initiator.

When used in the present invention, the shape and size of the fibrous reinforcing material are not particularly limited. For example, it may be continuous fibers, fiber webs formed by bonding, or fiber fabrics.

The fibrous reinforcing material of the present invention refers to a material selected from glass fibers, carbon fibers, polyester fibers, natural fibers, aramid fibers, nylon fibers, basalt fibers, boron fibers, silicon carbide fibers, asbestos fibers, whiskers, metal fibers or combinations thereof.

The polyurethane composition of the present invention comprises B1) one or more organic polyols. The content of the organic polyol is 21-60% by weight, based on the total weight of the polyurethane composition being 100% by weight. The organic polyol may be an organic polyol commonly used in the art for preparing polyurethanes, including but not limited to polyether polyols, polyether carbonate polyols, polyester polyols, polycarbonate diols, polymer polyols, vegetable oil-based polyols, or combinations thereof.

The polyether polyol can be prepared by a known process, for example, by reacting an olefin oxide with a starter in the presence of a catalyst.

Those skilled in the art are familiar with methods for measuring the hydroxyl value, such as that disclosed in Houben Weyl, Methoden der Organischen Chemie, vol. XIV/2 Makromolekulare Stoffe, p. 17, Georg Thieme Verlag; Stuttgart 1963. The entire content of this document is incorporated herein by reference.

When used in the present invention, the functionality and the hydroxyl value of the organic polyol refer to the average functionality and the average hydroxyl value, unless otherwise specified.

Optionally, the polyurethane reaction system of the present invention further comprises B3) one or more compounds with the structure of formula (I)

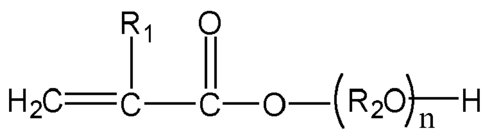

I ,

wherein $R_1$ is selected from hydrogen, methyl or ethyl; $R_2$ is selected from alkylene groups having 2-6 carbon atoms; n is an integer selected from 1-6.

Preferably, $R_2$ is selected from ethylene, propylene, butylene, pentylene, 1-methyl-1,2-ethylene, 2-methyl-1,2-ethylene, 1-ethyl-1,2-ethylene, 2-ethyl-1,2-ethylene, 1-methyl-1,3-propylene, 2-methyl-1,3-propylene, 3-methyl-1,3-propylene, 1-ethyl-1,3-propylene, 2-ethyl-1,3-propylene, 3-ethyl-1,3-propylene, 1-methyl-1,4-butylene, 2-methyl-1,4-butylene, 3-methyl-1,4-butylene and 4-methyl-1,4-butylene, propane-2,2-diylbis(4-phenylene), 1,4-xylylene, 1,3-xylylene, 1,2-xylylene.

Preferably, said component B3) is selected from hydroxyethyl methacrylate, hydroxypropyl methacrylate, hydroxybutyl methacrylate, hydroxyethyl acrylate, hydroxypropyl acrylate, hydroxybutyl acrylate or a combination thereof.

The compound of formula (I) can be prepared by methods commonly used in the art, for example, by esterification reaction of (meth)acrylic anhydride or (meth)acrylic acid, (meth)acrylic halide compound with $HO-(R_2O)_nH$. Those skilled in the art are familiar with the preparation methods, for example, description in "Handbook of Polyurethane Raw Materials and Auxiliary Agents", Chapter 3 (Liu Yijun, published on April 1, 2005), and "Polyurethane Elastomers", Chapter 2 (Liu Houjun, published in August 2012), as well as CN 104974502A. The entire contents of the aforementioned documents are incorporated herein by reference.

Preferably, the polyurethane composition of the present invention further comprises component C) a free radical reaction initiator. The free radical initiator used in the present invention can be added to the polyol component or the isocyanate component or both components. Specifically, it may include t-butyl peroxyisopropylcarbonate, t-butyl peroxy-3,5,5-trimethylhexanoate, methyl ethyl ketone peroxide, cumene hydroperoxide, and the like. Preferably, the content of the free radical reaction initiator of the present invention is 0.1-8% by weight, based on the total weight of the polyurethane

composition of the present invention being 100% by weight. In addition, there may also be an accelerator, such as a cobalt compound or an amine compound.

Optionally, the polyurethane composition may further comprise a catalyst for catalyzing the reaction of isocyanate groups (NCO) and hydroxyl groups (OH). Suitable catalysts for the polyurethane reaction are preferably but not limited to amine catalysts, organometallic catalysts, or mixtures thereof. Preferably, the amount of the catalyst is 0.001-10% by weight, based on the total weight of the polyurethane composition of the present invention being 100% by weight.

In an embodiment of the present invention, the polyurethane polyaddition reaction (that is, the polyaddition reaction of the isocyanate groups and the hydroxyl groups) and the free radical polymerization reaction proceed simultaneously. It is well known to those skilled in the art that suitable reaction conditions can be selected, so that the polyurethane polyaddition reaction and the free radical polymerization reaction proceed successively. But the polyurethane matrix prepared in this way and the polyurethane matrix prepared in the condition that the polyurethane polyaddition reaction and the free radical polymerization reaction proceed simultaneously have different structures, which makes the mechanical properties and manufacturability of the prepared polyurethane composites are different.

Optionally, the above-mentioned polyurethane composition may also contain an auxiliary agent or an additive.

The internal mold release agent that can be used in the present invention includes any conventional mold release agent used in the production of polyurethanes. Examples thereof include long-chain carboxylic acids, especially fatty acids, such as stearic acid, and amines of long-chain carboxylic acids, such as stearamide, fatty acid esters, metal salts of long-chain carboxylic acids, such as zinc stearate, or polysiloxanes.

Examples of flame retardants that can be used in the present invention include triaryl phosphates, trialkyl phosphates, halogen-bearing triaryl phosphates or trialkyl phosphates, melamine, melamine resins, halogenated paraffins, red phosphorus or combinations thereof.

Other additives that can be used in the present invention include water scavengers, such as molecular sieves; antifoaming agents, such as polydimethylsiloxane; coupling agents, such as monoethylene oxide or organoamine-functionalized trialkoxysilanes or combinations thereof. The coupling agent is particularly preferably used to improve the adhesion between the resin matrix and the fibrous reinforcing material. Fine-particle fillers, such as clay and fumed silica, are often used as thixotropic agents.

Free radical reaction inhibitors that can be used in the present invention include polymerization inhibitors and polymerization retarders, etc, such as some phenols, quinone compounds or hindered amine compounds, examples of which include methylhydroquinone, p-methoxyphenol, benzoquinone, multi-methyl pyridine derivatives, low-valent copper ions, etc.

Surprisingly, we found that the polyurethane reaction system of the isocyanate composition comprising specific components A1 and A2 of the present invention has shorter curing time and longer gel time. It can be better and more flexibly applicable to various polyurethane processes, especially the preparation for composites prepared by polyurethane pultrusion process, such as the preparation for large-scale polyurethane pultruded composites. Specifically, the fibrous reinforcing material can have a longer time and get better infiltration and molding before gelation at room temperature, such as before entering the mold, while it can be cured faster at high temperatures, such as after entering the mold. At the same time, we also unexpectedly found that the composite of the present invention can effectively comprise a larger amount of reinforcing material, preferably fibrous reinforcing material.

Unless otherwise defined, all technical and scientific terms used herein have the same meaning as commonly understood by those skilled in the art to which the present invention belongs. When the definitions of terms in this specification conflict with the meanings commonly understood by those skilled in the art to which the present invention belongs, the definitions described herein shall apply.

The present invention is illustrated as below by the examples. But it should be understood that the scope of the present invention is not limited by these examples.

**Description of drawings**

Hereinafter, the present invention will be exemplarily explained in conjunction with the accompanying drawings:

Figure 1 shows a schematic view of the mold and the process flow of the method for preparing a polyurethane pultruded composite by pultrusion process according to a preferred embodiment of the present invention, in which 1 represents the fibrous reinforcing material, 2 represents the peel ply; 3 represents the preforming plate; 4 represents the injection device; 5 represents the infiltration box; 6 represents the mold, 7 represents the profile/polyurethane pultruded composite, 8 represents the clamping device.

Figure 2 shows a view of the relative position of the infiltration box and the injection device/and the peel ply, which is preferred in the present invention, in which 2a, 2b represent the peel plies (the fibrous reinforcing material that

should be located between the two peel plies is not drawn, so that the figure is not too complicated), 4 represents the injection device, 4a, 4b represent the injection ports, 5 represents the infiltration box, 5a represents the inlet of the infiltration box, 5b represents the outlet of the infiltration box, 5m and 5n represent the two opposite sides of the infiltration box (5), 4i represents the injection channel, and X represents the vertical distance between the injection device (4) and the inlet (5a) of the infiltration box in the pultrusion direction.

Fig. 3 shows a front view of the infiltration box preferred in the present invention, in which 5i and 5j respectively represent the upper and lower opposite sides of the infiltration box.

Figure 4 shows a cross-sectional view of the infiltration box preferred in the present invention, in which 5 represents the infiltration box, 5a represents the inlet of the infiltration box, and 5b represents the outlet of the infiltration box.

Examples

Description of tests for performance parameters in examples of this application:
Functionality refers to the value determined according to the industry formula: Functionality = hydroxyl value * molecular weight / 56100; wherein the molecular weight is determined by GPC high performance liquid chromatography;
Isocyanate index refers to the value calculated by the following formula:

$$\text{Isocyanate index (\%)} = \frac{\text{Moles of isocyanate groups (NCO groups) in component A}}{\text{Moles of groups reactive toward isocyanate groups in component B}} \times 100\%$$

Viscosity refers to the value determined according to GB/T 12009.3-2009.
NCO content refers to the content of NCO groups in the system, measured by GB/T 12009.4-2016.
Curing time refers to the time from the mixing of component A and component B of the reaction system until it is cured at 180°C.
Gel time refers to the time from the mixing of component A and component B of the reaction system until the viscosity reaches a certain value (for example, about 10,000 mPa.s) at 25°C. Gel time of the present invention is tested using a gel tester. Specifically, component A and the component B are mixed evenly and placed in the gel tester. The time from pressing the start button until the gel tester stops working is recorded as the gel time. The gel tester used in the present invention is available from Shanghai SINO-LAB Instrument Co. Ltd. (Typ: GT-STHP-220, from Shanghai SINO-LAB Instrument Co. Ltd.).

Source and description of raw materials

Table 1-List of raw materials

| Name of raw materials/equipment | Specification/brand | Supplier |
|---|---|---|
| Isocyanate 1 (content of 2,2'-MDI and 2,4'-MDI: 4.2% by weight, 2,2'-MDI being < 0.3% by weight) | Desmodur 1511L | Covestro Polymers (China) Co., Ltd. |
| Isocyanate 2 (content of 2,2'-MDI and 2,4'-MDI: 17.5% by weight, 2,2'-MDI being ≥5% and <10%) | Desmodur 44CP26 | Covestro Polymers (China) Co., Ltd. |
| Polyether polyol | Baydur 18BD215 | Covestro Polymers (China) Co., Ltd. |
| Internal mold release agent | Baydur 18BD101 | Covestro Polymers (China) Co., Ltd. |

Table 2-The ratios of components of Example 1 and Comparative Example 1 and test results thereof

| Item | Example 1 | Comparative Example 1 |
|---|---|---|
| Baydur 18BD215 | 100 | 100 |

(continued)

| Item | Example 1 | Comparative Example 1 |
| --- | --- | --- |
| Baydur 18BD101 | 4 | 4 |
| Desmodur 44CP26 | 140 | |
| Desmodur 1511L | | 143.5 |
| Gel time at 25°C (minutes) | 21 | 16 |
| Curing time at 180°C (sec) | 19.1 | 19.5 |
| Viscosity of the polyurethane reaction system at initial mixing at 25°C (mPa·s) | 362 | 578 |

It can be seen from the experimental results of Example 1 and Comparative Example 1 (both conducted at the same index) as above that the curing time of the polyurethane reaction system of the present invention is shorter, while the gel time is longer. In this way, a longer time for infiltration and molding is achieved, the mold can be filled more uniformly, and polyurethane products with uniform filling and superior quality are obtained. At the same time, the product can also have a higher glass fiber content, and can be better and more flexibly used in different application fields.

Although the present invention has been described in detail above for the purpose of the present invention, it should be understood that this detailed description is only exemplary. In addition to the content that can be defined by the claims, those skilled in the art can make various changes without departing from the spirit and scope of the present invention.

## Claims

**1.** An isocyanate composition comprising:

A1) 2,2'-diphenylmethane diisocyanate and/or
A2) 2,4'-diphenylmethane diisocyanate;

wherein the sum of the amounts of A1) and A2) is 5.0-34% by weight, preferably 10.5-34% by weight, more preferably 13.5-24.8 % by weight, particularly preferably 13.5-19.5% by weight, based on the total weight of the isocyanate composition.

**2.** The isocyanate composition according to claim 1, **characterized in that** the amount of A1) 2,2'-diphenylmethane diisocyanate is ≥ 1.2% by weight, preferably 1.5-21.6% by weight, more preferably 2.0-21.6% by weight, particularly preferably 3-11% by weight, based on the total weight of the isocyanate composition.

**3.** The isocyanate composition according to claim 1 or 2, **characterized in that** the isocyanate composition further comprises A4) 32-55% by weight of a polynuclear polymeric isocyanate, based on the total weight of the isocyanate composition.

**4.** The isocyanate composition according to any one of claims 1 to 3, **characterized in that** the amount of polymeric diphenylmethane diisocyanate in the isocyanate composition is ≤ 54% by weight, preferably ≤ 50% by weight, based on the total weight of the isocyanate composition.

**5.** The isocyanate composition according to any one of claims 1 to 4, **characterized in that** a polyurethane reaction system comprising the isocyanate composition wherein the sum of the amounts of A1) and A2) is 5.0-34% by weight, based on the total weight of the isocyanate composition, has a gel time at 25°C increased by ≥ 10%, preferably ≥ 15%, more preferably ≥ 20%, compared with that of the same polyurethane reaction system but wherein the sum of the amounts of A1) and A2) is not 5.0-34% by weight, based on the total weight of the isocyanate composition.

**6.** The isocyanate composition according to any one of claims 1 to 5, **characterized in that** a polyurethane reaction system comprising the isocyanate composition wherein the sum of the amounts of A1) and A2) is 5.0-34% by weight, based on the total weight of the isocyanate composition, has a curing time at 180°C reduced by ≥ 1%, preferably ≥ 1.5%, more preferably ≥ 2% , compared with that of the same polyurethane reaction system but wherein the sum

of the amounts of A1) and A2) is not 5.0-34% by weight, based on the total weight of the isocyanate composition.

**7.** The isocyanate composition according to any one of claims 1 to 6, **characterized in that** a polyurethane reaction system comprising the isocyanate composition comprising ≥ 1.2% by weight of A1), based on the total weight of the isocyanate composition, has a gel time at 25°C increased by ≥ 10%, preferably ≥ 15%, more preferably ≥ 20%, compared with that of the same polyurethane reaction system but comprising the isocyanate composition comprising < 1.2% by weight of A1), based on the total weight of the isocyanate composition.

**8.** The isocyanate composition according to any one of claims 1 to 7, **characterized in that** a polyurethane reaction system comprising the isocyanate composition comprising ≥ 1.2% by weight of A1), based on the total weight of the isocyanate composition, has a curing time at 180°C reduced by ≥ 1%, preferably ≥ 1.5%, more preferably ≥ 2%, compared with that of the same polyurethane reaction system but comprising the isocyanate composition comprising < 1.2% by weight of A1), based on the total weight of the isocyanate composition.

**9.** A polyurethane reaction system comprising:

component A), the isocyanate composition according to any one of claims 1 to 8;
component B), comprising:

B1) 50-100% by weight, preferably 58-91.6% by weight, based on the total weight of component B), of an organic polyol, preferably a polyether polyol, with functionality of 2-5, preferably 2-4 and weight-average molecular weight of ≤ 900 g/mol (tested according to ISO14900-2017), preferably ≤ 800g/mol, more preferably ≤ 750g/mol;
B2) 0-50% by weight, preferably 8-40% by weight, based on the total weight of component B), of a polyether polyol with functionality of 2-3 and weight-average molecular weight of ≥ 1200g/mol (tested according to ISO14900-2017), preferably ≥ 1500g/mol, more preferably ≥ 2000g/mol.

**10.** The polyurethane reaction system according to claim 9, **characterized in that** component B) further comprises: B3) one or more compounds with the structure of formula (I)

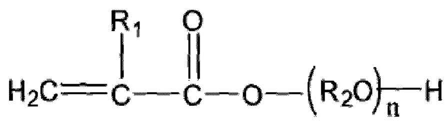

I

wherein R1 is selected from hydrogen, methyl or ethyl; R2 is selected from alkylene groups having 2-6 carbon atoms, propane-2,2-diylbis(4-phenylene), 1,4-xylylene, 1,3-xylylene, 1,2-xylylene; n is an integer selected from 1-6.

**11.** The polyurethane reaction system according to claim 9 or 10, **characterized in that** the polyurethane reaction system comprising the isocyanate composition comprising ≥ 1.2% by weight of A1), based on the total weight of the isocyanate composition, has a curing time at 25°C reduced by ≥ 1%, preferably ≥ 1.5%, more preferably ≥ 2%, compared with that of the same polyurethane reaction system but comprising the isocyanate composition comprising < 1.2% by weight of A1), based on the total weight of the isocyanate composition.

**12.** A polyurethane resin prepared by the reaction of the polyurethane reaction system according to any one of claims 9 to 11.

**13.** Use of the isocyanate composition according to any one of claims 1 to 8 for the production of backboards for solar cells and/or frames for solar cells.

**14.** A method for preparing a polyurethane composite by mixing a polyurethane composition comprising the following components:

the polyurethane reaction system according to any one of claims 9 to 11;
at least a reinforcing material, preferably a fibrous reinforcing material.

**15.** A polyurethane composite prepared by the method for preparing a polyurethane composite according to claim 14.

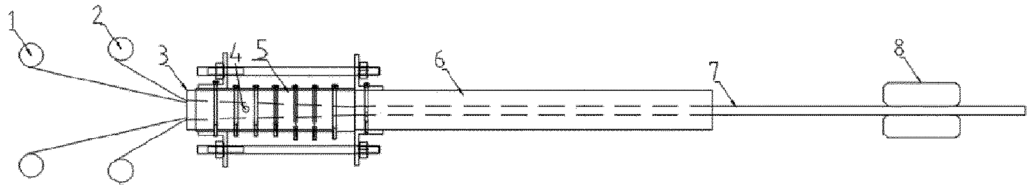


Fig. 1

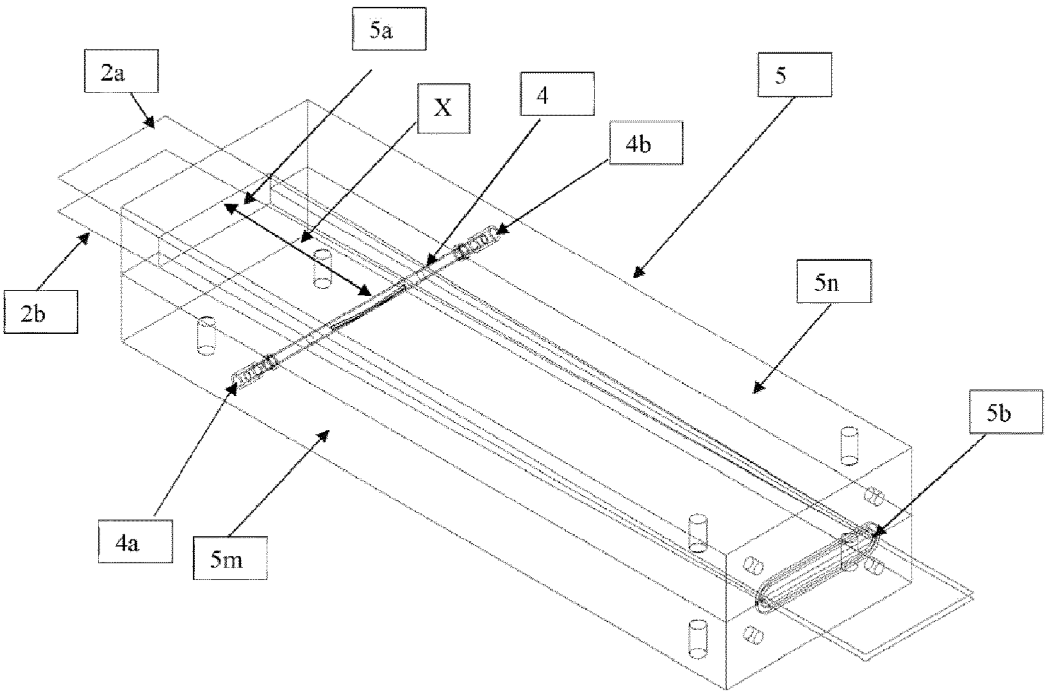


Fig. 2

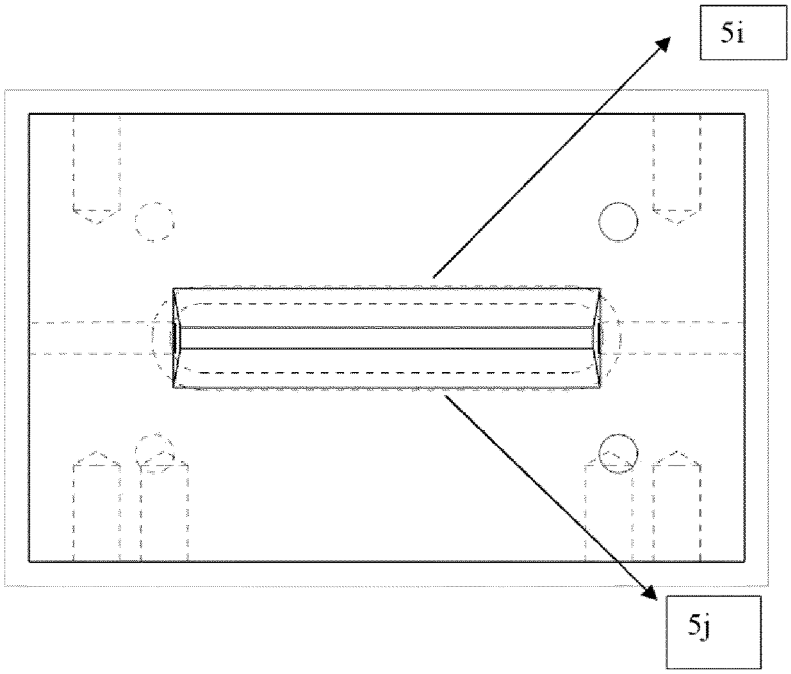


Fig. 3

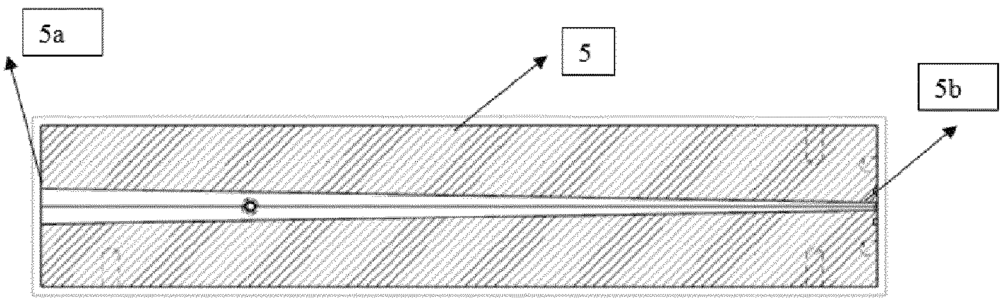


Fig. 4

European Patent Office / Europäisches Patentamt / Office européen des brevets

# EUROPEAN SEARCH REPORT

Application Number
EP 22 15 5516

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/063294 A1 (BASF SE [DE]) 4 April 2019 (2019-04-04)<br>* page 1, line 4 - line 6; example Comparative Example 1; compound Isocyanate 1 *<br>* page 6, line 23 - line 25 *<br>----- | 1,4,6, 14,15 | INV.<br>C08G18/48<br>C08G18/76 |
| X<br><br>A | US 2020/062887 A1 (WEGENER DIRK [DE] ET AL) 27 February 2020 (2020-02-27)<br>* paragraph [0093]; examples 1-3, 5, 6; table 3; compounds MDI-1, MDI-2 *<br>----- | 1,3-6, 9-13,15<br>2,7,8,14 | |
| X | US 2020/282674 A1 (KILIAN BENEDIKT [DE] ET AL) 10 September 2020 (2020-09-10)<br>* paragraph [0024] - paragraph [0036] *<br>----- | 1,4,6, 14,15 | |
| X | WO 2022/013182 A1 (COVESTRO DEUTSCHLAND AG [DE]) 20 January 2022 (2022-01-20)<br>* page 12, line 1 - line 16; table 1; compounds MDI-1 *<br>----- | 1,4,6, 14,15 | TECHNICAL FIELDS SEARCHED (IPC) |
| X | EP 2 262 842 B1 (POLYTEX SPORTBELÄGE PRODUKTIONS-GMBH [DE]) 24 January 2018 (2018-01-24)<br>* paragraph [0001]; examples 1-3; table 1 *<br>* paragraph [0064] *<br>----- | 1,2,5, 7-9,12 | C08G |

The present search report has been drawn up for all claims

2

| Place of search | Date of completion of the search | Examiner |
|---|---|---|
| Munich | 7 July 2022 | Sütterlin, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 15 5516

This annex lists the patent family members relating to the patent documents cited in the above-mentioned European search report. The members are as contained in the European Patent Office EDP file on
The European Patent Office is in no way liable for these particulars which are merely given for the purpose of information.

07-07-2022

| Patent document cited in search report | Publication date | Patent family member(s) | Publication date |
|---|---|---|---|
| WO 2019063294 A1 | 04-04-2019 | AU 2018340584 A1 | 16-04-2020 |
| | | CN 111183166 A | 19-05-2020 |
| | | KR 20200062302 A | 03-06-2020 |
| | | WO 2019063294 A1 | 04-04-2019 |
| US 2020062887 A1 | 27-02-2020 | CN 110546181 A | 06-12-2019 |
| | | DK 3612579 T3 | 14-02-2022 |
| | | EP 3392284 A1 | 24-10-2018 |
| | | EP 3612579 A1 | 26-02-2020 |
| | | JP 2020517765 A | 18-06-2020 |
| | | US 2020062887 A1 | 27-02-2020 |
| | | WO 2018192927 A1 | 25-10-2018 |
| US 2020282674 A1 | 10-09-2020 | CN 111405976 A | 10-07-2020 |
| | | DK 3691880 T3 | 19-04-2022 |
| | | EP 3466659 A1 | 10-04-2019 |
| | | EP 3691880 A1 | 12-08-2020 |
| | | RU 2767352 C1 | 17-03-2022 |
| | | US 2020282674 A1 | 10-09-2020 |
| | | WO 2019068728 A1 | 11-04-2019 |
| WO 2022013182 A1 | 20-01-2022 | NONE | |
| EP 2262842 B1 | 24-01-2018 | AU 2009228586 A1 | 01-10-2009 |
| | | CN 101981079 A | 23-02-2011 |
| | | DK 2262842 T3 | 05-03-2018 |
| | | EP 2262842 A2 | 22-12-2010 |
| | | ES 2660160 T3 | 21-03-2018 |
| | | JP 5465234 B2 | 09-04-2014 |
| | | JP 2011515544 A | 19-05-2011 |
| | | KR 20100137485 A | 30-12-2010 |
| | | RU 2010143889 A | 10-05-2012 |
| | | US 2009247697 A1 | 01-10-2009 |
| | | WO 2009118112 A2 | 01-10-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 104045806 A
- CN 107771193 A
- CN 110546181 A
- WO 2007087987 A
- CN 104974502 A


### Non-patent literature cited in the description


- Makromolekulare Stoffe. **HOUBEN WEYL.** Methoden der Organischen Chemie. Georg Thieme Verlag, 1963, vol. XIV, 17
- **LIU YIJUN.** Handbook of Polyurethane Raw Materials and Auxiliary Agents. 01 April 2005
- **LIU HOUJUN.** Polyurethane Elastomers. August 2012